# EUROPEAN PATENT APPLICATION

(11) **EP 2 535 244 A1**
(43) Date of publication of application: **19.12.2012**
(21) Application number: 11739602.8
(22) Date of filing: 12.01.2011
(51) Int. Cl.: B62D 25/20, B60N 2/42, B60R 7/04

(54) **VEHICLE COLLISION LOAD TRANSMISSION STRUCTURE**

(30) Priority: 08.02.2010 JP 2010025410
(71) Applicant: Toyota Shatai Kabushiki Kaisha, Kariya-shi, Aichi 448-0002 (JP)
(72) Inventor: YAMADA Yukishige, Kariya-shi Aichi 448-0002 (JP); OBARA Yasutaka, Kariya-shi Aichi 448-0002 (JP); YAMAGUCHI Shinichi, Kariya-shi Aichi 448-0002 (JP)
(74) Representative: Chettle, Adrian John
(86) International application number: PCT/JP2011/050325
(87) International publication number: WO 2011/096253

(57) **Abstract**

The present invention is intended to prevent a load transmission efficiency from a seat rod of one seat to a seat rod of the other seat from being reduced when a vehicle is hit from a lateral side thereof.

A vehicle collision load transmission structure of the present invention may include seat rods (2r) and (3r) of right and left seats, and a load transmission body (10) that is disposed on a vehicle floor F so as to be positioned between the seat rods (2r) and (3r), in which a collision load applied from a vehicle lateral side can be received by the load transmission body (10) via one (2r) of the seat rods and can be transmitted from the load transmission body (10) to a vehicle side wall positioned opposite to an impact area via the other (3r) of the seat rods, wherein the load transmission body (10) is composed of a base portion (20) that is secured to the vehicle floor (F), and a load receiving portion (30) that is disposed on the base portion (20) and is constructed such that the seat rods (2r) and (3r) can contact the same, and wherein the base portion (20) is constructed so as to be deformed more easily than the vehicle floor (F) due to application of the collision load in the vehicle width direction.

## Description

### TECHNICAL FIELD

The present invention relates to a vehicle collision load transmission structure in which a collision load applied from a vehicle lateral side can be received by a load transmission body via a seat rod of one seat and can be transmitted from the load transmission body to a vehicle side wall positioned opposite to an impact area via a seat rod of the other seat.

### BACKGROUND ART

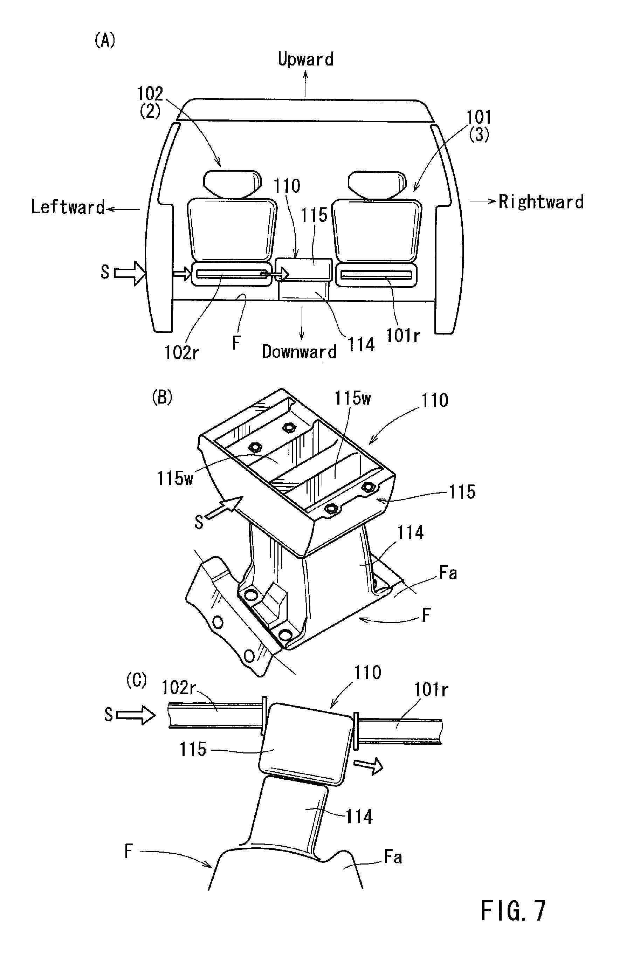

A related vehicle collision load transmission structure is described in Patent Document 1.
As shown in FIG. 7(A), in the vehicle collision load transmission structure, a load transmission body 110 is disposed in a position corresponding to a console box (not shown) between a driver seat 101 and a passenger seat 102.
As shown in FIG. 7(B), the load transmission body 110 is composed of a base portion 114 secured to a vehicle floor F, and a load receiving portion 115 disposed on the base portion 114. The load receiving portion 115 is a portion to which seat rods 101r and 102r of the driver seat 101 and the passenger seat 102 can contact when a vehicle is hit from a lateral side thereof. The load receiving portion 115 has a box-shaped member of which the interior portion is segmented and reinforced by a plurality of vertical walls 115w extending in a vehicle width direction.
The base portion 114 is a rigid box-shaped member that is capable of supporting the load receiving portion 115 in the same height as the seat rods 101r and 102r of the driver seat 101 and the passenger seat 102. Further, the base portion 114 has leg portions that are formed in four corners thereof and are bolted on an elongated central raised portion Fa of the floor F.

### PRIOR ART DOCUMENT

### PATENT DOCUMENT

Patent Document 1: Japanese Laid-Open Patent Publication No. 2009-126332

### SUMMARY OF THE INVENTION

### PROBLEM TO BE SOLVED BY THE INVENTION

In the above-described load transmission body 110, the load receiving portion 115 is formed as the box-shaped member, and the interior portion thereof is segmented by a plurality of vertical walls 115w. Further, the base portion 114 is also formed as the rigid box-shaped member. That is, both of the load receiving portion 115 and the base portion 114 of the load transmission body 110 are respectively formed so as to have a high strength. Therefore, as shown in FIG. 7(C), for example, when a collision load S is applied to the load receiving portion 115 of the load transmission body 110 via the seat rod 102r of the passenger seat 102, the floor F can be deformed instead of deforming of the load transmission body 110, so that the load transmission body 110 can be tilted toward the driver seat 101. As a result, the load receiving portion 115 of the load transmission body 110 can be inclined downwardly from a horizontal posture. This may reduce a collision load transmission efficiency between the load transmission body 110 and the seat rods 101r of the driver seat 101.

The present invention has been made in order to solve problems described above. Accordingly, it is an object of the present invention to prevent a load transmission efficiency from a seat rod of one seat to a seat rod of the other seat from being reduced when a vehicle is hit from a lateral side thereof.

### MEANS FOR SOLVING THE PROBLEM

The above object can be attained by the invention as described in each of the claims.
An invention defined in claim 1 provides a vehicle collision load transmission structure which may include seat rods that are respectively disposed in right and left seats so as to extend in a vehicle width direction, and a load transmission body that is disposed on a vehicle floor so as to be positioned between the seat rods of the right and left seats, in which a collision load applied from a vehicle lateral side can be received by the load transmission body via the seat rod of one of the seats and can be transmitted from the load transmission body to a vehicle side wall positioned opposite to an impact area via the seat rod of the other of the seats, wherein the load transmission body is composed of a base portion that is secured to the vehicle floor, and a load receiving portion that is disposed on the base portion and is constructed such that the seat rods can contact the same, and wherein the base portion is constructed so as to be deformed more easily than the vehicle floor due to application of the collision load in the vehicle width direction.

According to the present invention, the base portion of the load transmission body is constructed so as to be deformed more easily than the vehicle floor due to application of the collision load in the vehicle width direction. Therefore, when the collision load in the vehicle width direction is applied to the load receiving portion of the load transmission body via the seat rod of one of the seats, the base portion of the load transmission body can be deformed in a direction of the collision load while the vehicle floor is not substantially deformed. Thus, because the vehicle floor is not substantially deformed, the load transmission body can be prevented from being tilted. As a result, the load receiving portion disposed on the base portion can be displaced in the direction of the collision load, so as to contact the seat rod of the other of the seats. That is, unlike the conventional structure, the load receiving portion can be prevented from contacting the seat rod of the other of the seats while it is inclined downwardly. Thus, the collision load can be effectively transmitted from the seat rod of one of the seats to the seat rod of the other of the seats.

In the invention as defined in claim 2, the base portion is formed as a tunnel-shaped member of which the front and rear sides in a vehicle longitudinal direction are opened.
Therefore, when the collision load in the vehicle width direction is applied to the base portion, the base portion can be easily deformed in the direction of the collision load.

In the invention as defined in claim 3, the base portion is formed as a press formed article.
Therefore, manufacturing costs of the base portion can be reduced.

### EFFECTS OF THE INVENTION

According to the present invention, when a vehicle is hit from a lateral side thereof, a load transmission efficiency from a seat rod of one seat to a seat rod of the other seat can be increased.

### BRIEF DESCRIPTION OF THE DRAWINGS

FIG. 1 is a side view of a base portion and a load receiving portion used in a vehicle collision load transmission structure according to Embodiment 1 of the present invention, which view illustrates an assembled condition.
FIG. 2 is a perspective view of the base portion and the load receiving portion used in the vehicle collision load transmission structure, which view illustrates the assembled condition.
FIG. 3 is a rear view of the base portion and the load receiving portion used in the vehicle collision load transmission structure (a view that is viewed from line III-III of FIG. 1), which view illustrates the assembled condition.
FIG. 4 is a perspective view of the load receiving portion used in the vehicle collision load transmission structure.
FIG. 5 is a perspective view of the base portion used in the vehicle collision load transmission structure.
FIG. 6 is a rear view of the base portion and the load receiving portion, which view illustrates a function of the vehicle collision load transmission structure.
FIG. 7 is a series of views, i.e., a rear view of a base portion and a load receiving portion that constitute a conventional vehicle collision load transmission structure (FIG. 7(A)), a perspective view of the same (FIG. 7(B)), and a rear view of the same, which view illustrates a function of the vehicle collision load transmission structure (FIG. 7(C)).

### MODE FOR CARRYING OUT THE INVENTION

### [Embodiment 1]

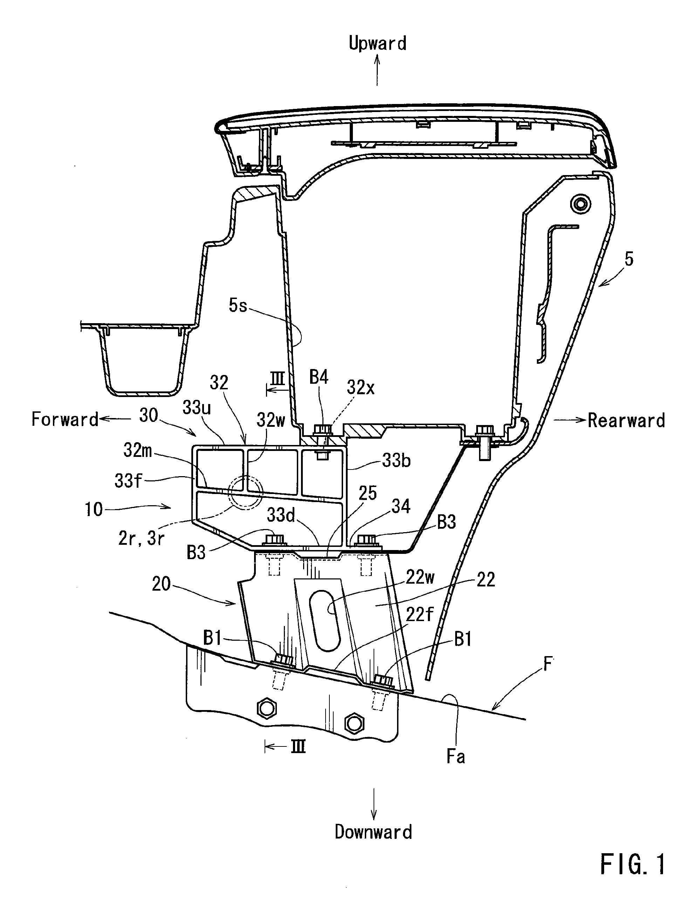

A vehicle collision load transmission structure according to Embodiment 1 of the present invention will be hereinafter described with reference to FIGS. 1 to 6.
Further, forward and backward, rightward and leftward, and upward and downward in the drawings respectively correspond to forward and backward, rightward and leftward, and upward and downward of a vehicle.

### <Outline of Vehicle Collision Load Transmission Structure>

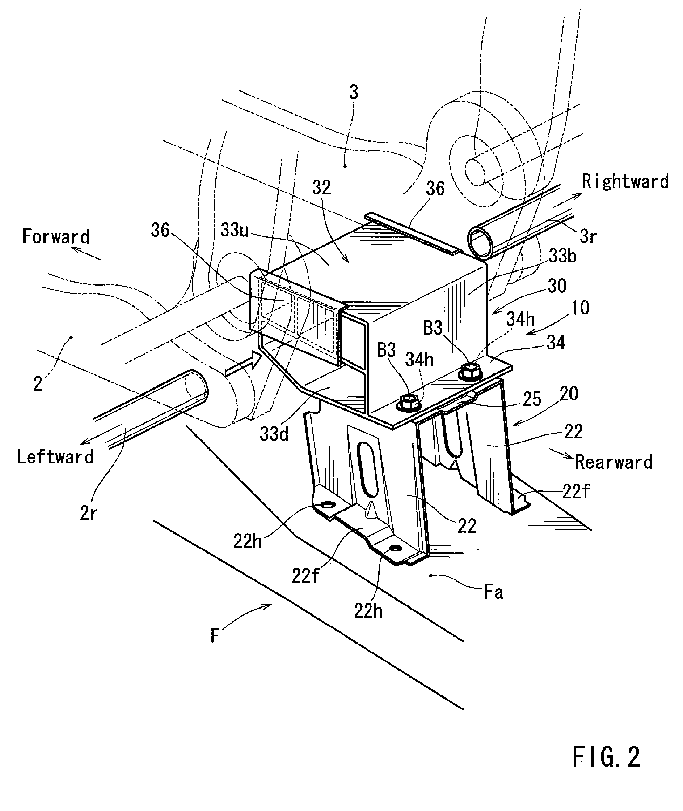

The vehicle collision load transmission structure according to the present embodiment is a structure in which a collision load applied from a vehicle lateral side can be received by a load transmission body 10 via a seat rod 2r of one seat (e.g., a passenger seat 2 shown in FIG. 2 (a chain double-dashed line)) and can be transmitted from the load transmission body 10 to a vehicle side wall positioned opposite to an impact area via a seat rod 3r of the other seat (a driver seat 3).

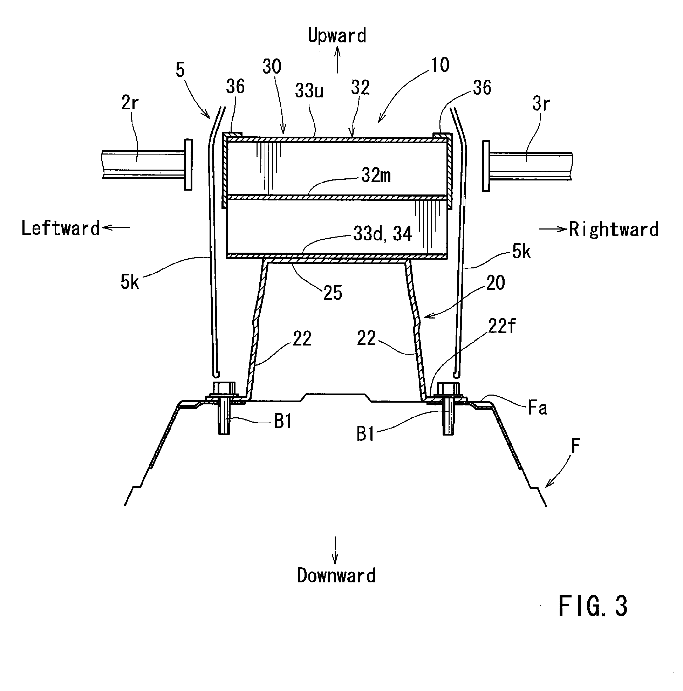

The seat rod 3r of the driver seat 3 is disposed in an interior portion of a seat cushion (not shown) of the driver seat 3 and is positioned so as to extend in a vehicle width direction. Similarly, the seat rod 2r of the passenger seat 2 is disposed in an interior portion of a seat cushion (not shown) of the passenger seat 2 and is positioned so as to extend in the vehicle width direction in the same height as the seat rod 3r of the driver seat 3 (FIGS. 2 and 3).
As shown in FIG. 1, the load transmission body 10 is positioned under an article storing portion 5s of a consol box 5. Further, as shown in FIG. 3, the load transmission body 10 is disposed within an ornamental outer shell 5k of the consol box 5. Further, the load transmission body 10 is interposed between the seat rod 3r of the driver seat 3 and the seat rod 2r of the passenger seat 2 positioned on both sides thereof in the vehicle width direction without contacting the same.
Further, in FIGS. 2 and 3, in order to clarify a relation among the seat rods 2r and 3r and the load transmission body 10, a distance between the members 2r and 10 and a distance between the members 3r and 10 are exaggerated.

### <Regarding Load Transmission Body 10>

The load transmission body 10 is a member that is capable of transmitting the collision load applied from the seat rod 2r of one seat (e.g., the passenger seat 2) to the seat rod 3r of the other seat (e.g., the driver seat 3). As shown in FIG. 1 and other figures, the load transmission body 10 is composed of a base portion 20 that is secured to an elongated central raised portion Fa of a vehicle floor F, and a load receiving portion 30 that is disposed on the base portion 20 and is capable of receiving the collision load.
Further, the vehicle floor F is formed of, for example, a steel plate having a thickness of 1.2 mm.

### <Regarding Base Portion 20 of Load Transmission Body 10>

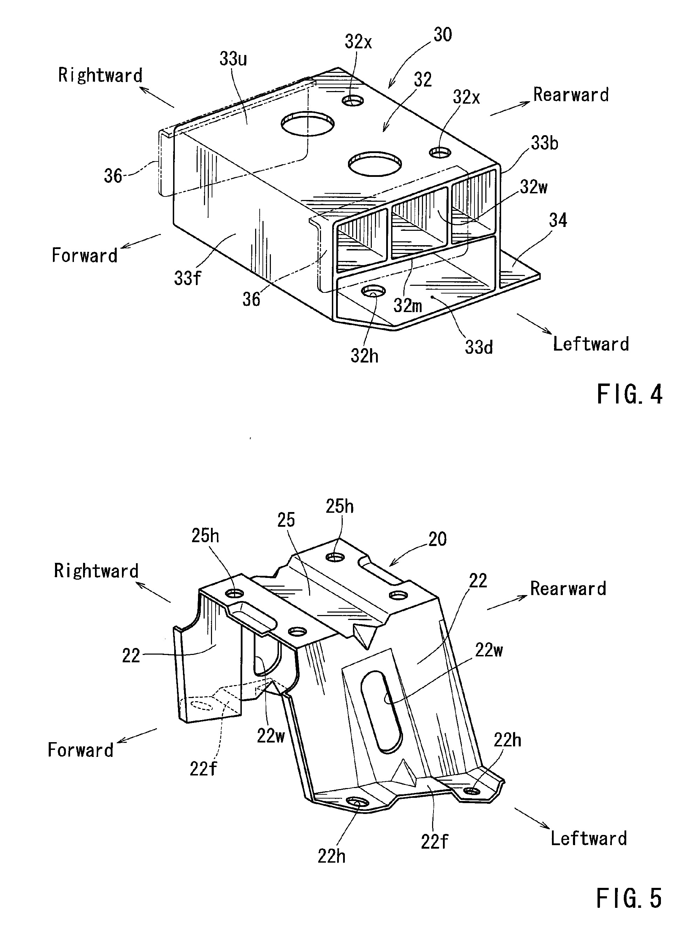

The base portion 20 of the load transmission body 10 is a base member that is capable of horizontally supporting the load receiving portion 30 (which will be hereinafter described) in the same height as the seat rod 3r of the driver seat 3 and the seat rod 2r of the passenger seat 2. As shown in FIGS. 2 and 5 and other figures, the base portion 20 is composed of right and left vertical wall portions 22, and a ceiling plate portion 25 that is horizontally bridged between upper end portions of the vertical wall portions 22. That is, the base portion 20 is formed as a tunnel-shaped member of which the front and rear sides in a vehicle longitudinal direction are opened. Further, the right and left vertical wall portions 22 respectively have flanged portions 22f that are formed in lower end portions thereof. Each of the flanged portions 22f is formed by folding the lower end portions of the vertical wall portions 22 outwardly over a desired width in the vehicle width direction. The right and left flanged portions 22f are portions that are connected to the elongated central raised portion Fa of the vehicle floor F. The right and left flanged portions 22f have bolt insertion holes 22h into which connecting bolts B1 are inserted. The bolt insertion holes 22h are positioned to be aligned with bolt insertion holes (not shown) that are formed in the elongated central raised portion Fa. Further, the right and left vertical wall portions 22 of the base portion 20 respectively have vertically elongated openings 22w for strength controlling purposes. Each of the openings 22w is formed in a central portion of each of the vertical wall portions 22.
The ceiling plate portion 25 of the base portion 20 has a rectangular table shape. Further, the ceiling plate portion 25 has bolt insertion holes 25h that are formed in four corner portions thereof, i.e., front and rear and right and left corner portions thereof, so that the load receiving portion 30 (which will be hereinafter described) can be bolted on the ceiling plate portion 25.
The base portion 20 is formed by, for example, press forming a steel plate (2.0 mm). Further, as previously described, the base portion 20 is formed as the tunnel-shaped member of which the front and rear sides are opened. Therefore, the base portion 20 can be deformed in a direction of the collision load more easily than the vehicle floor F (the steel plate having the 1.2 mm thickness) due to application of the collision load in the vehicle width direction. In addition, the base portion 20 can be reduced in weight because the front and rear sides thereof are opened, i.e., because no wall portions are present in the front and rear sides thereof.

### <Regarding Load Receiving Portion 30 of Load Transmission Body 10>

The load receiving portion 30 of the load transmission body 10 is a portion to which end portions of the seat rods 3r and 2r of the driver seat 3 and the passenger seat 2 can contact with interleaving the ornamental outer shell 5k of the consol box 5 when the vehicle is hit from a lateral side thereof. As shown in FIG. 3, the load receiving portion 30 has a width greater than the base portion 20, so that right and left end portions thereof can be projected in the vehicle width direction beyond right and left end portions of the base portion. As a result, a distance between the seat rod 3r of the driver seat 3 and the load receiving portion 30 and a distance between the seat rod 2r of the passenger seat 2 and the load receiving portion 30 can be reduced as much as possible.
As shown in FIG. 4 and other figures, the load receiving portion 30 is composed of a receiving portion main body 32 having a rectangular cylindrical shape, a flange portion 34 projected rearwardly from a rear end periphery of a lower end portion of the receiving portion main body 32 and having a constant width, and a pair of side plate portions 36 (FIG. 2 and other figures) covering a right end face and a left end face of the receiving portion main body 32.

As shown in FIG. 4 and other figures, the receiving portion main body 32 of the load receiving portion 30 is constructed of a front plate portion 33f, an upper plate portion 33u, a lower plate portion 33d and a rear plate portion 33b, so as to have the rectangular cylindrical shape that extends in the vehicle width direction. An interior portion of the receiving portion main body 32 is vertically separated by a transverse partition plate portion 32m, so as to have upper and lower cavities. Further, the upper cavity formed in the receiving portion main body 32 by the transverse partition plate portion 32m is segmented at regular intervals by two vertical partition plate portions 32w that extend in the vehicle width direction. Further, as shown in FIG. 1, the seat rod 3r and the seat rod 2r are positioned such that the load applied therefrom can be received in an intersection portion of the transverse partition plate portion 32m and a front side one of the vertical partition plate portions 32w of the receiving portion main body 32.
Thus, due to the vertical partition plate portions 32w and the transverse partition plate portion 32m, the load receiving portion 30 may have a desired strength that is required to bear the collision load S in the vehicle width direction.
As shown in FIGS. 1 and 2, a substantially rear half portion of the lower plate portion 33d of the receiving portion main body 32 is formed as a flattened portion, so as to be seated on the ceiling plate portion 25 of the base portion 20. Further, the flange portion 34 of the load receiving portion 30 is formed as an extension of the flattened portion of the lower plate portion 33d. Further, a substantially front half portion of the lower plate portion 33d is inclined upwardly and forwardly

The lower plate portion 33d of the receiving portion main body 32 and the flange portion 34 respectively have bolt insertion holes 32h and 34h (FIGS. 2 and 4) into which connecting bolts B3 (FIG. 1) are inserted. The bolt insertion holes 32h and 34h are positioned to be aligned with the bolt insertion holes 25h formed in the ceiling plate portion 25 of the base portion 20.
Further, as shown in FIGS. 1 and 4 and other figures, the upper plate portion 33u of the receiving portion main body 32 has bolt insertion holes 32x that are formed in right and left portions of a rear portion thereof, so that the receiving portion main body 32 can be bolted on the article storing portion 5s of the consol box 5.
The receiving portion main body 32 and the flange portion 34 of the load receiving portion 30 are constructed of an aluminum plate having a thickness of 2 mm.
Further, as shown in FIG. 2 and other figures, each of the pair of side plate portions 36 covering the right end face and the left end face of the receiving portion main body 32 has a rectangular shape that extends in the vehicle longitudinal direction and has a size that is capable of covering an area in which the seat rod 3r or 2r contacts.

### <Regarding Assembling Method of Load Transmission Body 10>

First, as shown in FIG. 2, the bolt insertion holes 22h of the flanged portions 22f of the base portion 20 are aligned with the bolt insertion holes (not shown) of the elongated central raised portion Fa of the vehicle floor F, so that the base portion 20 can be secured to the vehicle floor using the connecting bolts B1 (FIG. 1). In this condition, the ceiling plate portion 25 of the base portion 20 can be held horizontally.
Next, the bolt insertion holes 32h and 34h of the receiving portion main body 32 and the flange portion 34 of the load receiving portion 30 are aligned with the bolt insertion holes 25h formed in the ceiling plate portion 25 of the base portion 20, so that the load receiving portion 30 can be secured to the ceiling plate portion 25 of the base portion 20 using the connecting bolts B3 (FIGS. 1 and 2 and other figures).
Next, as shown in FIG. 1, bolt insertion holes (not shown) of the article storing portion 5s of the consol box 5 are aligned with the bolt insertion holes 32x of the upper plate portion 33u of the load receiving portion 30, so that the article storing portion 5s can be secured to the upper plate portion 33u of the load receiving portion 30 using connecting bolts B4. At this time, the load transmission body 10 and the article storing portion 5s can be covered by the ornamental outer shell 5k of the consol box 5.

### <Function of Vehicle Collision Load Transmission Structure of Present Embodiment>

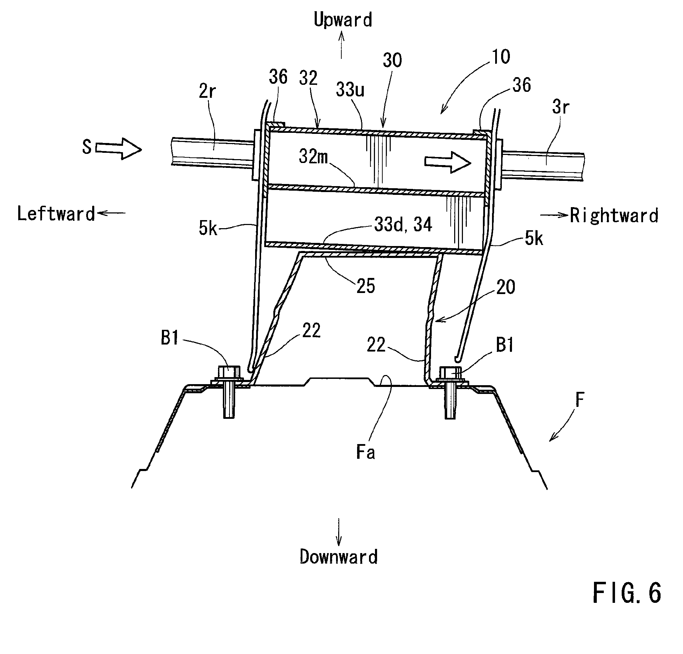

As shown in, for example, FIGS. 7(A) and 6, in the vehicle collision load transmission structure of the present embodiment, when the collision load S is applied from left of the vehicle, a left center pillar (not shown) is pressed into a vehicle cabin due to the collision load S, so that the passenger seat 2 is pressed toward the driver seat 3. As a result, the collision load S can be transmitted to the load receiving portion 30 of the load transmission body 10 via the seat rod 2r of the passenger seat 2.
When the collision load S is applied to the load receiving portion 30 from the seat rod 2r of the passenger seat 2, the collision load S can be applied to the base portion 20 supporting the load receiving portion 30 via the load receiving portion 30. As previously described, the base portion 20 is formed as the tunnel-shaped member of which the front and rear sides are opened, so as to be easily deformed compared with the vehicle floor F due to application of the collision load S. Therefore, as shown in FIG. 6, when the collision load S is applied to the base portion 20, only the base portion 20 can be deformed in the direction of the collision load S while the vehicle floor F is not substantially deformed, so that the load receiving portion 30 supported by the base portion 20 moves in the direction of the collision load S. That is, the load transmission body 10 can be prevented from being tilted, so that the load receiving portion 30 can contact the seat rod 3r of the drive seat 3 while moving in the direction of the collision load S. As a result, the collision load S can effectively be transmitted from the seat rod 2r of the passenger seat 2 to the seat rod 3r of the drive seat 3 via the load transmission body 10, and then be transmitted to a right center pillar (not shown).

### <Advantage of Vehicle Collision Load Transmission Structure of Present Embodiment >

According to the vehicle collision load transmission structure of the present embodiment, the base portion 20 of the load transmission body 10 is constructed so as to be deformed in the direction of the collision load S more easily than the vehicle floor F due to application of the collision load S in the vehicle width direction. Therefore, when the collision load S in the vehicle width direction is applied to the load receiving portion 30 of the load transmission body 10 via the seat rod 2r of the passenger seat 2, the base portion 20 of the load transmission body 10 can be deformed in the direction of the collision load S while the vehicle floor F is not substantially deformed. Thus, because the vehicle floor F is not substantially deformed, the load transmission body 10 can be prevented from being tilted. As a result, the load receiving portion 30 disposed on the base portion 20 can be displaced in the direction of the collision load S, so as to contact the seat rod 3r of the drive seat 3. That is, unlike the conventional structure, the load receiving portion 30 can be prevented from contacting the seat rod 3r of the drive seat 3 while it is inclined downwardly. Thus, the collision load S can be effectively transmitted from the seat rod 2r of the passenger seat 2 to the seat rod 3r of the drive seat 3.
Further, the base portion 20 is formed as the tunnel-shaped member of which the front and rear sides in the vehicle longitudinal direction are opened. Therefore, when the collision load S in the vehicle width direction is applied to the base portion 20, the base portion 20 can be easily deformed in the direction of the collision load S.
In addition, because the base portion 20 is formed as a press formed article, manufacturing costs thereof can be reduced.

### <Modified Forms>

Further, the present invention is not limited to the embodiment described above, and the embodiment can be easily changed or modified without departing from the scope of the present invention. For example, in the present embodiment, the base portion 20 of the load transmission body 10 is formed by press forming the steel plate. However, the base portion 20 can be formed of resins, aluminum or other such materials.
Further, in the present embodiment, the load receiving portion 30 of the load transmission body 10 is formed of the aluminum plate. However, the load receiving portion 30 can be formed of resins, the steel plate or other such materials.
In addition, a thickness of each of the load receiving portion 30 and the base portion 20 of the load transmission body 10 can be appropriately changed as necessary.

### DESCRIPTION OF SYMBOLS

2r...seat rod
2...passenger seat
3r...seat rod
3...drive seat
10...load transmission body
20...base portion
22...vertical wall portion
25...ceiling plate portion
30...load receiving portion
F...vehicle floor
Fa...elongated central raised portion
S...collision load

## Claims

1. A vehicle collision load transmission structure comprising seat rods that are respectively disposed in right and left seats so as to extend in a vehicle width direction, and a load transmission body that is disposed on a vehicle floor so as to be positioned between the seat rods of the right and left seats, in which a collision load applied from a vehicle lateral side can be received by the load transmission body via the seat rod of one of the seats and can be transmitted from the load transmission body to a vehicle side wall positioned opposite to an impact area via the seat rod of the other of the seats,
wherein the load transmission body is composed of a base portion that is secured to the vehicle floor, and a load receiving portion that is disposed on the base portion and is constructed such that the seat rods can contact the same, and
wherein the base portion is constructed so as to be deformed more easily than the vehicle floor due to application of the collision load in the vehicle width direction.

2. The vehicle collision load transmission structure as defined in claim 1, wherein the base portion is formed as a tunnel-shaped member of which the front and rear sides in a vehicle longitudinal direction are opened.

3. The vehicle collision load transmission structure as defined in claim 2, wherein the base portion is formed as a press formed article.
